# EUROPÄISCHE PATENTSCHRIFT

(11) **EP 1 701 431 B1**
(45) Veröffentlichungstag und Bekanntmachung des Hinweises auf die Patenterteilung: **02.12.2009**
(21) Anmeldenummer: 05005387.5
(22) Anmeldetag: 11.03.2005
(51) Int. Cl.: H02K 11/04

(54) **Klemmenkasten für einen Elektromotor**
Terminal box for an electric motor
Boîtier à bornes pour moteur électrique

(43) Veröffentlichungstag der Anmeldung: 13.09.2006
(73) Patentinhaber: Grundfos Management A/S, 8850 Bjerringbro (DK)
(72) Erfinder: Mikkelsen, Steen, 8850 Bjerringbro (DK)
(74) Vertreter: Vollmann, Heiko

(56) Entgegenhaltungen:
- EP-A- 0 456 169
- EP-A- 1 130 744
- EP-A- 1 176 706
- WO-A-98/35424
- DE-U1- 9 415 935

## Beschreibung

Die Erfindung betrifft einen Klemmenkasten gemäß den im Oberbegriff des Anspruchs 1 angegebenen Merkmalen.

Klemmkästen dieser Art werden typischerweise für netzbetriebene stationäre Elektromotoren kleiner und mittlerer Leistung eingesetzt, beispielsweise an Kreiselpumpenaggregaten mit Leistungen von 30 bis 2000 Watt, wie sie typischerweise als Umwälzpumpen, beispielsweise für Heizungen eingesetzt werden. Derartige Elektromotoren und somit auch Klemmenkästen werden in großer Stückzahl produziert, weshalb es besonders wirtschaftlich ist, diese kostengünstig als Spritzgussteile aus Kunststoff herzustellen. Dabei besteht der Klemmenkasten typischerweise aus einem Gehäuseunterteil, das fest mit dem Aggregatgehäuse verbunden wird und einem Gehäuseoberteil, das zum Zwecke des Anschlusses abnehmbar ausgebildet ist.

Um den Elektromotor energetisch günstig und drehzahlvariabel betreiben zu können, zählt es heute zum Stand der Technik, Frequenzumrichter vorzuschalten, auch kann andere Wärme erzeugende Elektronik vorgesehen sein, die üblicherweise im Klemmenkasten angeordnet wird, da hier sämtliche elektrischen Verbindungen des Motors zusammenlaufen. Wenn jedoch die Wärme ezeugende Elektronik im Klemmenkasten vorgesehen ist, stellt die Wärmeabfuhr häufig ein Problem da. Zwar gibt es inzwischen gut wärmeleitende spritzfähige Kunststoffe, doch haben diese häufig den Nachteil, dass ihre elektrischen Isolationseigenschaften nicht sehr gut sind, so dass größere Abstände einzuhalten sind, was wiederum nachteilig auf die Baugröße wirkt.

Es zählt daher schon zum Stand der Technik, Klemmenkästen aus Metall auszubilden, um nach Möglichkeit die gesamte Gehäuseoberfläche zur Wärmeabfuhr zu nutzen. Solche Klemmkästen sind jedoch kostenaufwändig, schwer und groß.

Aus EP 0 456 169 A1 ist es bekannt, den Klemmenkasten selbst aus Kunststoff, also aus vergleichsweise schlecht wärmeleitenden Material herzustellen. Um für eine ausreichende Wärmeabfuhr aus dem Gehäuse zu sorgen ist dort im Gehäuseboden eine Durchbrechung vorgesehen, durch welche ein Wärmeverteiler mit einem unterhalb des Gehäuses angeordneten Kühlkörper verbunden ist, dessen Kühlrippen zwischen die Kühlrippen des Motorgehäuses ragen und vom Kühlluftstrom des Motors zum Zwecke der Kühlung umströmt werden. Die dort beschriebene Anwendung ist konstruktiv aufwändig und hat den Nachteil, dass der Kühlkörper im Bereich nahe dem Motorgehäuse angeordnet ist, wo ohnehin ein vergleichsweise hohes Temperaturniveau herrscht. Dieser Nachteil verstärkt sich noch bei solchen Motoren die, die kein Kühlluftgebläse aufweisen also auf Wärmeabfuhr durch freie Konvektion angewiesen sind.

Ein Klemmenkasten gemäß dem Oberbegriff des Anspruchs ist aus EP 1 176 706 bekannt.

Vor diesem Hintergrund liegt der Erfindung die Aufgabe zugrunde, einen gattungsgemäßen Klemmenkasten so auszubilden, dass er einerseits kostengünstig, kompakt und leicht aus Kunststoffspritzgussteilen aufgebaut werden kann und andererseits eine gute Wärmeabfuhr aus dem Klemmenkasten ermöglicht.

Diese Aufgabe wird gemäß der Erfindung durch die in Anspruch 1 angegebenen Merkmale gelöst. Vorteilhafte Ausgestaltungen der Erfindungen sind in den Unteransprüchen der nachfolgenden Beschreibung und der Zeichnung angegeben.

Grundgedanke der vorliegenden Erfindung ist es, den Klemmenkasten in an sich bekannter Weise aus beispielsweise zwei Kunststoffspritzgussteilen, nämlich einem Gehäuseunterteil und einem Gehäuseoberteil herzustellen, jedoch zur Abfuhr der Wärme des im Klemmenkasten angeordneten Wärme erzeugenden Bauteils (bzw. Bauteile) am Gehäuseoberteil einen Deckel vorzusehen, der zumindest abschnittsweise aus einem wärmeleitenden Material besteht, wobei dieser Deckel mit dem Wärme erzeugenden Bauteil wärmeleitend verbunden ist und als Blechformteil ausgebildet ist. Auf diese Weise wird eine gute Wärmeabfuhr aus dem Inneren des Klemmenkastens nach außen gewährleistet, wobei der Klemmenkasten als solcher kostengünstig hergestellt und ausgebildet werden kann. Vorteilhaft ist der Deckel an der Oberseite des Gehäuseoberteils angeordnet, da dort die beste Wärmesenke und damit eine effektive Kühlung gegeben ist.

Deckel im Sinne der vorliegenden Erfindung muss nicht notwendiger Weise ein solcher sein, der eine Öffnung abschließt, wesentliches Merkmal ist vielmehr das er flächig einen Teil des Gehäuseoberteils abdeckt um eine möglichst große Fläche konvektiver Wärmeableitung zu gewährleisten.

Unter wärmeleitenden Material im Sinne der vorliegenden Erfindung wird ein Material verstanden, das einen Wärmeleitwert von mindestens 1 W/m K, vorzugsweise von 20 W/m K oder mehr, aufweist. Besonders vorteilhaft wird der Deckel oder Deckelabschnitt jedoch aus Metall, vorzugsweise einem gut wärmeleitenden Metall wie Aluminium oder einer Aluminiumlegierung hergestellt.

Die Kühlwirkung des Deckels oder Deckelabschnitts kann noch dadurch erhöht werden, dass dort zusätzlich ein Kühlkörper vorgesehen ist oder der Deckel bzw. Deckelabschnitt selbst als Kühlkörper ausgebildet ist oder Teil eines Kühlkörpers bildet.

Der Deckel ist als Blechformteil auszubilden, da dieser dann kostengünstig als Stanz- und Formteil beispielsweise aus Aluminiumblech hergestellt werden kann.

Die Wärmeverbindung zwischen dem Wärme erzeugenden Bauteil und dem Deckel kann bei geeigneter Ausbildung durch das Gehäuseoberteil hindurch erfolgen. Besonders günstig ist es jedoch, in der Oberseite des Gehäuseoberteils eine Durchbrechung vorzusehen, durch welche die wärmeleitende Verbindung mit dem Deckel erfolgt. Dann können die zwischen dem zu kühlenden elektrischen/elektronischen Bauteil und dem Deckel anzuordnenden Bauteile nach Wärmeleitkriterien optimiert werden.

Um einerseits die Durchbrechung an die räumlichen Gegebenheiten der Bauteile anpassen zu können, andererseits jedoch eine möglichst einfache und wirkungsvolle Abdichtung zwischen Deckel und Gehäuseoberteil zu schaffen, ist gemäß einer Weiterbildung der Erfindung vorgesehen, dies funktional zu trennen, so dass die Ausnehmung eine quasi beliebige Form aufweisen kann wo hingegen die Dicht- und Passfunktion zwischen Deckel und Gehäuseoberteil durch eine Ausformung im Deckel einerseits und eine entsprechende Einformung im Gehäuseoberteil andererseits erfolgt. Die Aus- und Einformungen sind rund, vorzugsweise kreisrund, so dass sie einfach und wirkungsvoll durch Eingliederung einer ringförmigen Dichtung zueinander abgedichtet werden können. Dadurch, dass die Ausformung im Deckel in die Einformung in das Gehäuseoberteil eingreift kann zudem eine einfache und passgenaue Montage des Deckels auf dem Gehäuseoberteil erfolgen.

Besonders zweckmäßig ist es, wenn zwischen Einformung und Ausformung eine umlaufende Dichtung vorgesehen ist, die vorteilhaft radial wirkt, so dass die Dichtheit unabhängig vom Anpressdruck des Deckels auf das Gehäuseoberteil sichergestellt wird.

Zweckmäßigerweise ist das Gehäuseoberteil zum Motor hin offen ausgebildet und schließt dort an das zum Gehäuseoberteil hin offene Gehäuseunterteil an. Die beiden Gehäuseteile sind über eine umlaufende Dichtung dicht miteinander verbunden, so dass der Klemmenkasten auch insoweit nach außen hin gegen Eindringen von Spritzwasser oder dergleichen abgedichtet ist.

Herstellungstechnisch besonders günstig ist es, mindestens eine oder vorzugsweise mehrere der vorgenannten Dichtungen, also beispielsweise die Dichtung zwischen Gehäuseoberteil und Gehäuseunterteil sowie die Dichtung zwischen Gehäuseoberteil und Deckel im Mehrkomponentenspritzgussverfahren zusammen mit dem Gehäuseoberteil herzustellen. Hierdurch wird nicht nur die Teilevielfalt reduziert sondern auch die Montage vereinfacht, da die Dichtungen nicht gesondert zu montieren sind.

Der Deckel selbst ist vorteilhaft u-förmig ausgebildet, so dass er mit seinen Schenkeln das Gehäuseoberteil seitlich umgreift und dort vorzugsweise formschlüssig rastend derart festgelegt ist, dass seine Ausformung in Richtung auf die gehäuseseitige Einformung kraftbeaufschlagt ist. Das formschlüssige Rasten hat den Vorteil, dass der Deckel durch einfaches Aufsetzen montiert und zugleich fixiert werden kann, also keine weiteren Halteelemente erforderlich sind. Zweckmäßigerweise erfolgt eine zusätzliche Schraubbefestigung um den Deckel dauerhaft gegen Lösen zu sichern. Die Vorspannung des Deckels gegenüber der gehäuseseitigen Einformung dient in erster Linie einen zuverlässigen Kraftschluss zwischen dem Wärme erzeugenden Bauteil innerhalb des Klemmenkastens, etwaigen wärmeleitenden Bauteilen und dem Deckel. Diese Kraft ist nicht zur Abdichtung erforderlich, gleichwohl kann eine Dichtwirkung hierdurch gefördert werden.

Um einen guten Wärmeübergang zwischen Deckel und Wärme erzeugenden Bauteil bzw. einen damit wärmeleitend verbundenen Bauteil zu erzeugen ist der Deckel so ausgebildet, dass er im Bereich der Durchbrechung des Gehäuseoberteils flächig anliegt.

Ein besonders günstiger innere Aufbau des Klemmenkastens wird dadurch erreicht, dass innerhalb des Gehäuses eine Platine angeordnet ist, welche Steckkontakte trägt die zur elektrischen Verbindung mit dem Wicklungskopfs des Motors bestimmt und dicht an der Unterseite des Gehäuseunterteils herausgeführt sind und die zugleich mindestens ein wärmeerzeugendes Bauteil trägt, dessen Wärme durch den Deckel abgeführt wird. Die Platine ist daher zweckmäßigerweise innerhalb des Gehäuses etwa parallel und mit Abstand zum Deckel angeordnet, wobei der Abstand durch das Wärme erzeugende Bauteil und vorteilhaft ein wärmeleitendes dazwischen angeordnetes Bauteil ausgefüllt ist.

Um das Wärme erzeugende Bauteil, typischerweise ein auf der Platine angeordneter integrierter Schaltkreis, wärmeleitend mit dem Deckel zu verbinden, ist es vorteilhaft, zwischen Deckel und diesem Bauteil oder gegebenenfalls diesen Bauteilen ein oder mehrere Wärmeleitkissen anzuordnen. Es handelt sich hierbei um gelartige Körper, die eine hohe Wärmeleitfähigkeit haben und darüber hinaus elastisch und plastisch verformbar sind, so dass sie sich einerseits an die Kontur des Bauteils anformen andererseits jedoch die Andruckkraft vom Deckel auf das Bauteil übertragen und so Unterbrechungen in der Wärmeleitung vermeiden. Wenn innerhalb des Klemmenkastens ein Frequenzumrichter vorgesehen ist, dann bilden typischerweise die Leistungsschalter das Wärme erzeugende Bauteil bzw. die Wärme erzeugenden Bauteile, die je nach Baugröße entweder als integrierter Schaltkreis oder bei größeren Leistungen auch als separate Bauteile ausgebildet sein können.

Um die Platine innerhalb des Klemmenkastens sicher abzustützen und somit die vom Deckel auf das Wärme erzeugende Bauteil ausgeübten Andruckkräfte sicher aufnehmen zu können, ist in einer Weiterbildung der Erfindung ein ebenfalls als Kunststoffspritzgussteil ausgebildetes Halteelement vorgesehen, mit welchem die Platine innerhalb des Gehäuses positioniert und mit dem Deckel in wärmeleitende Verbindung gebracht ist. Ein solches Halteelement wird zweckmäßigerweise so ausgebildet, dass es zugleich auch die im Gehäuseunterteil vorgesehenen Befestigungspunkte des Klemmenkastens am Motorgehäuse mit umfasst, so dass durch entsprechende Schraubverbindungen die Platine, das darunter angeordnete Halteelement sowie das Gehäuseunterteil zusammen auf dem Motorgehäuse befestigt sind.

Die Erfindung ist nachfolgend anhand von in der Zeichnung dargestellten Ausführungsbeispielen näher erläutert. Es zeigen
- Fig. 1: in vereinfachter perspektivischer Darstellung einen erfindungsgemäßen Klemmenkasten,
- Fig. 2: eine Explosionsdarstellung des Klemmenkastens nach Fig. 1,
- Fig. 3: eine perspektivische Ansicht von unten auf den Klemmenkasten mit abgenommenen Gehäuseunterteil,
- Fig. 4: eine Seitenansicht des Klemmenkastens nach Fig. 1,
- Fig. 5: einen Schnitt durch den Klemmenkasten längs der Schnittlinie V-V in Fig. 4
- Fig. 6: in vergrößerter Darstellung die Einzelheit VI in Fig. 5,
- Fig. 7: einen Klemmenkasten mit alternativ ausgebildeten Deckel in der Darstellung nach Fig. 1 und
- Fig. 8: einen Klemmenkasten mit einer weiteren Ausführungsvariante des Deckels in der Darstellung nach Fig. 1.

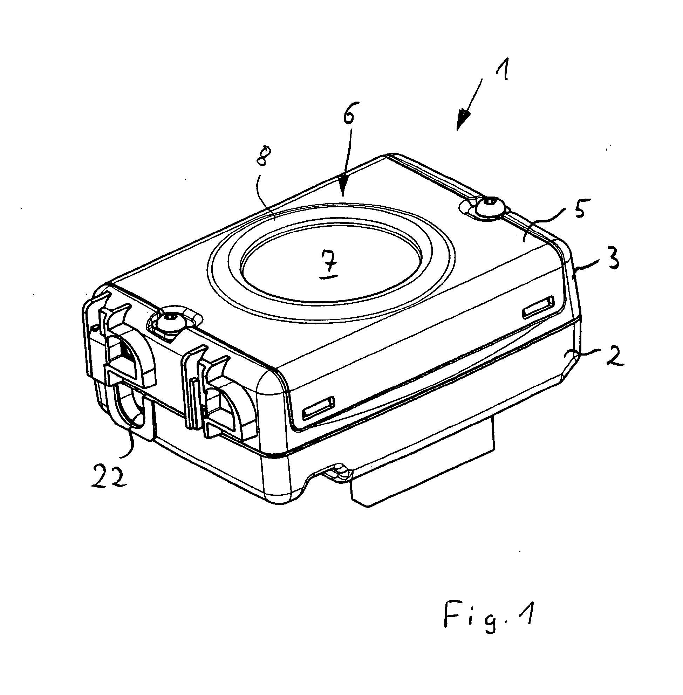

Der anhand der Figuren 1 bis 6 beschriebene Klemmenkasten 1 ist im Wesentlichen quaderförmig ausgebildet und in an sich bekannter Weise zur Montage an einem Motorgehäuse, hier an dem Gehäuse eines Kreiselpumpenaggregates vorgesehen.

Der Klemmenkasten 1 ist vollständig abgedichtet und besteht aus einem Gehäuseunterteil 2 sowie einem Gehäuseoberteil 3, die jeweils wannenförmig und mit ihren offenen Seiten zueinander weisend angeordnet sind. Zwischen Gehäuseunterteil 2 und Gehäuseoberteil 3 ist eine umlaufende Dichtung 4 angeordnet, welche einstückig mit dem Gehäuseoberteil 3 ausgebildet ist und die Bauteile zueinander abdichtet.

Das Gehäuseoberteil 3 ist an seiner Oberseite sowie den beiden Längsseiten zur Aufnahme eines dieses nach oben abschließenden und übergreifenden Deckels 5 ausgebildet. Der Deckel 5 ist u-förmig ausgebildet, so dass er das Gehäuseoberteil 3 sowohl an der Oberseite als auch an den beiden Längsseiten überdeckt.

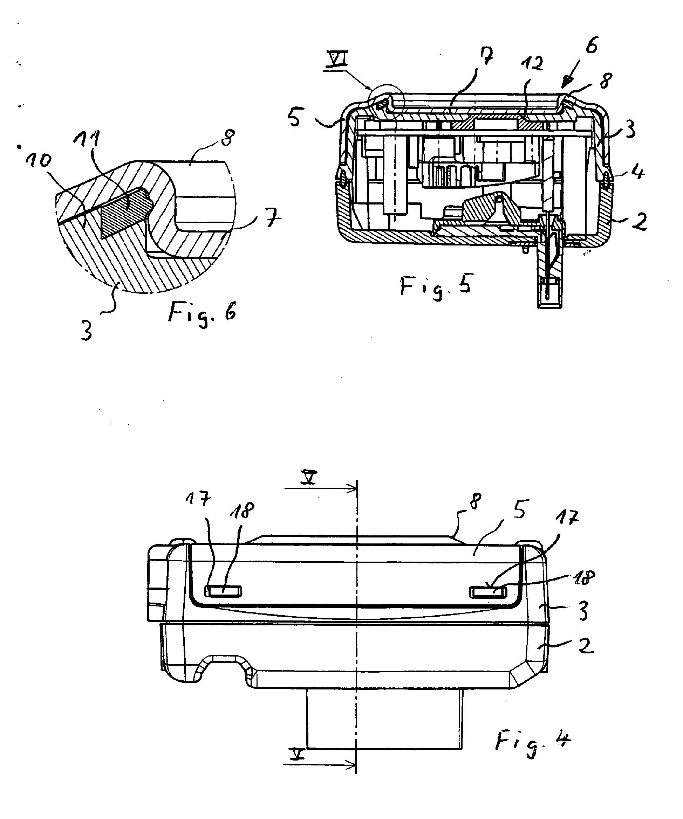

Der Deckel 5 weist an seiner Oberseite eine zentrale Ausformung 6 auf, die kreisrund ausgebildet ist und die sich gemäß Darstellung der Figur 6 zunächst aus dem Grundmaterial an der Oberseite schräg nach oben, dann um etwa 90° abgebogen ein Stück nach unten erstreckt um dann in einen zentralen unterhalb der Ebene des Grundmaterials liegenden flächigen Teil 7 überzugehen. Die Form der Ausformung im Einzelnen ergibt sich insbesondere aus den Figuren 5 und 6 und ist im Wesentlichen durch eine umlaufende nach außen vorspringenden Ringwulst 8 und einen darin nach unten, also zum Gehäuseoberteil 3 zurückspringenden flächigen Teil 7 gebildet.

Entsprechend ist im Gehäuseoberteil 3 an der Oberseite eine Einformung 9 vorgesehen, die durch einen Ringwulst 10 gebildet ist derart, dass der Ringwulst 8 mit dem flächigen Teil 7 des Deckels 5 formschlüssig innerhalb des Ringwulstes 10 der Einformung 9 eingliederbar sind. Dabei ist an der nach innen und oben weisenden Seite des Ringwulstes 10 eine Dichtung 11 am Gehäuseoberteil 3 angeformt, welche im montierten Zustand radial am Ringwulst 8 anliegt und dadurch den Deckel 5 gegenüber dem Gehäuseoberteil 3 im Bereich zwischen Einformung und Ausformung abdichtet.

Innerhalb der durch den Ringwulst 10 umgrenzten Fläche ist in der Oberseite des Gehäuseoberteils 3 eine im Wesentlichen rechteckig Durchbrechung 12 vorgesehen, durch welche die Wärmeleitverbindung zu einem darunter im Klemmenkasten befindlichen Wärme erzeugenden Bauteil 13 erfolgt.

Innerhalb des Klemmenkastens 1 ist parallel zur Oberseite des Gehäuseoberteils 3 bzw. zum flächigen Teil 7 des Deckels 5 eine Platine 14 angeordnet, die sich über nahezu den gesamten Klemmenkasten 1 erstreckt. Diese Platine 14 trägt sämtliche elektronischen Bauteile sowie Kontakte. Von den elektronischen Bauteilen ist hier nur ein integrierter Schaltkreis 13 beschrieben, der den Leistungskreis eines Frequenzumrichters bildet. Neben dem Bauteil 13 ist nur beispielhaft ein weiteres Bauteil 15 dargestellt, um zu verdeutlichen, das mit dieser Konstruktion ein, zwei oder beliebt viele Wärme erzeugende Bauteile gekühlt werden können. Diese Bauteile 13 und 15 sind nach oben durch ein hier in Draufsicht etwa L-förmiges Wärmeleitkissen 16 überdeckt, welches im montierten Zustand eine wärmeleitende Verbindung nicht nur mit den Oberseiten der Bauteile 13 und 15 herstellt, sondern, wie in Fig. 5 sichtbar ist, diese auch seitlich umgreift um damit einem innigen Wärmeleitkontakt zu diesen Bauteilen 13, 15 herzustellen. Das Wärmeleitkissen 16 wird dabei durch die Durchbrechung 12 gedrückt, so dass es flächig an der Unterseite des flächigen Teils 7 des Deckels 5 anliegt und somit eine Wärmeleitverbindung zwischen den wärmeleitenden Bauteilen 13 und 15 und dem Deckel herstellt.

Die Platine 14, die im montierten Zustand in der in Fig. 5 dargestellten Stellung parallel zum Deckel 5 innerhalb des Klemmenkastens fixiert ist, bildet ein Widerlager für die von oben durch den Deckel 5 aufgebrachten Druckkräfte. Der Deckel 5 ist aus Blech geformt und übergreift mit seinen seitlichen Schenkeln das Gehäuseoberteil 3 auch seitlich. Er ist so ausgelegt, dass er dann, wenn die vier seitlichen Ausnehmungen 17 in den seitlich am Gehäuseoberteil 3 vorspringenden Rastkörpern 18 nach Aufweiten der Schenkel formschlüssig einrasten, eine Kraft nach unten ausübt, und zwar mit dem flächigen Teil 7 wodurch das Wärmeleitkissen 16 auf die Wärme erzeugenden Bauteile 13 und 15 gedrückt wird, wobei die Platine 14 dann ein Gegenlager bildet.

Gestützt wird die Platine 14 durch ein ebenfalls als Spritzgussteil ausgebildetes Halteelement 19, dass vier Arme aufweist, die von einer zentralen Hülse 20 sternförmig ausgehen und an ihren Enden ebenfalls Hülsen 21 aufweisen. Die Länge dieser Hülsen 20, 21 ist so dimensioniert, dass die Platine 14 flächig abgestützt wird. Die Hülsen 20 und 21 stützen sich an ihrer Unterseite im Gehäuseunterteil ab. Fluchtend zu den Hülsen 20 und 21 sind entsprechende Ausnehmungen in der Platine 14 sowie im Gehäuseunterteil 2 vorgesehen. Durch die Ausnehmungen in der Platine 14, die darunter liegenden Hülsen 20 und 21 sowie die darunter liegenden Ausnehmungen im Gehäuseunterteil 2 sind Schrauben geführt, mit denen diese Bauteile unmittelbar am Motorgehäuse befestigt sind.

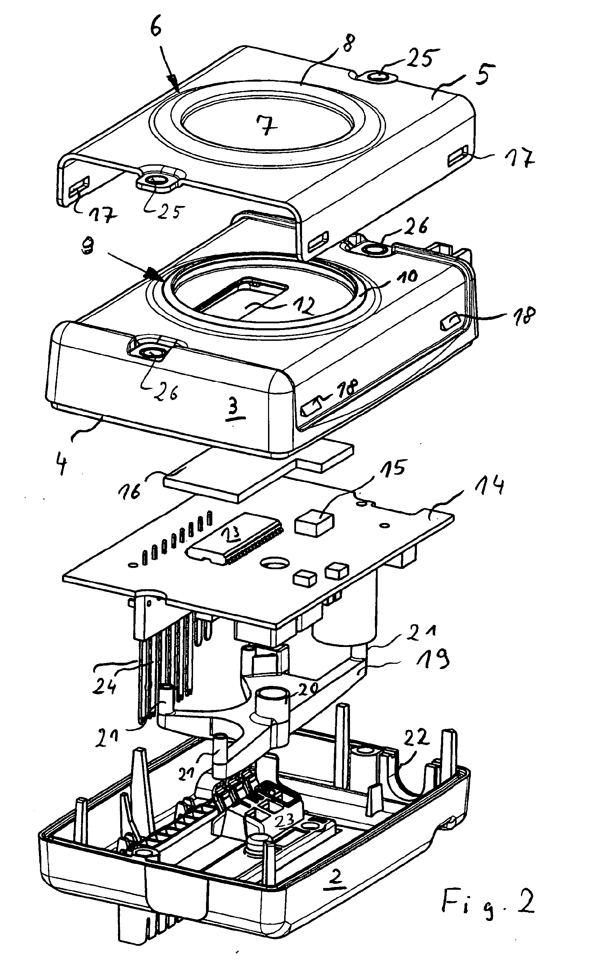

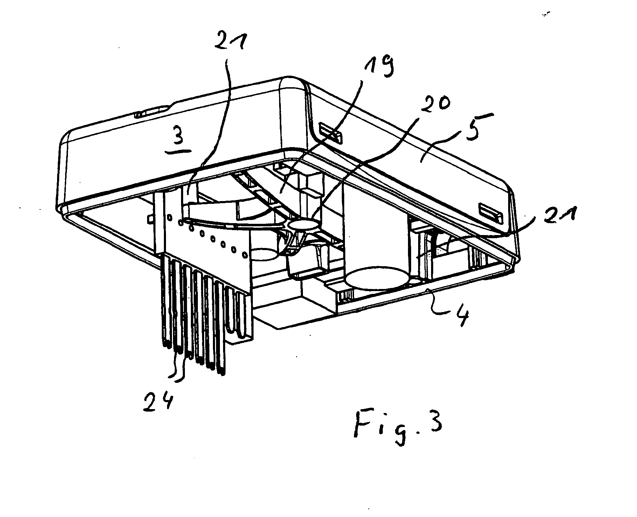

In der Seite des Gehäuseunterteils 2 ist eine Kabeldurchführung 22 vorgesehen durch welche das Netzversorgungskabel in dem Klemmenkasten dichtend eingeführt ist. Dieses Kabel wird elektrisch mit den im Gehäuseunterteil 2 vorgesehenen Klemmen 23 verbunden. Die Platine 14 weist an ihrer Unterseite nach unten vorspringende Kontaktstifte 24 auf, die in den Figuren 2 und 3 zu sehen sind. Die sechs langen Kontaktstifte sind dichtend durch den Boden des Gehäuseunterteils 2 hindurchgeführt und zum Eingriff in den Wicklungskopfs des Motors bestimmt, wenn der Klemmenkasten montiert ist. Die beiden kürzeren Kontaktstifte 22 hingegen greifen beim Aufsetzen der Platine in entsprechende Verbindungen der Klemmen 23 und stellen die elektrische Netzverbindung her.

Nachdem das Gehäuseunterteil 2 mit dem Halteelement 19 und der Platine 14 auf dem Motorgehäuse schraubbefestigt ist, wird das Gehäuseoberteil 4 aufgesetzt und sodann der Deckel 5 auf letzteres aufgeklippt. Befestigt wird das Gehäuseoberteil 3 mit dem darauf aufgeklippten Deckel 5 durch zwei Schrauben, welche durch entsprechende Ausnehmungen 25 im Deckel sowie dazu fluchtend 26 im Gehäuseoberteil 3 ragen, mit denen das Gehäuseoberteil 3 mit dem Gehäuseunterteil 2 verschraubt wird.

Durch die vorbeschriebene Konstruktion wird die in den Wärme erzeugenden Bauteilen 13 und 15 entstehende Wärme zuverlässig über das Wärmeleitkissen 16 durch die Durchbrechung 12 hindurch zum Deckel 5 geleitet, der aufgrund seiner Fläche die Wärme an die Umgebungsluft abführt. Die Gehäusebauteile 2 und 3 können aus üblichen Kunststoffspritzguss hergestellt werden und brauchen nicht wärmeleitfähig zu sein.

Wenn die durch den Deckel 5 gebildete Kühlfläche zur Abfuhr der Wärme nicht ausreicht, kann diese durch Vergrößerung des Deckels, beispielsweise durch seitliche Verlängerung an den Schenkeln entsprechend großflächiger dimensioniert werden.

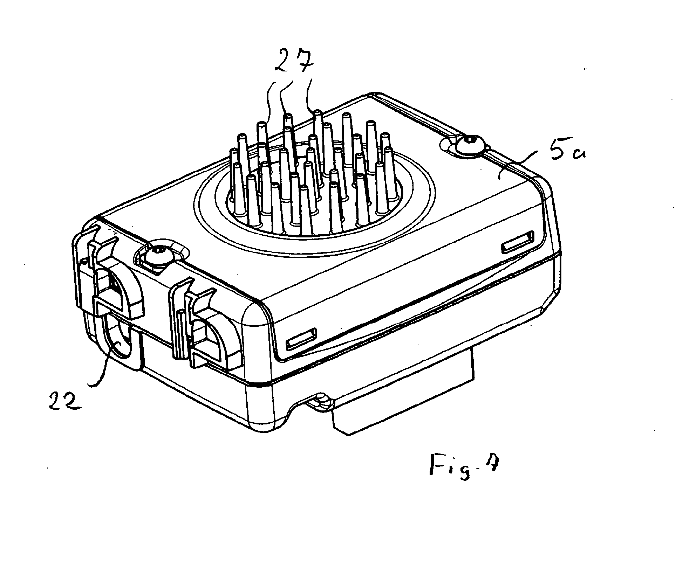

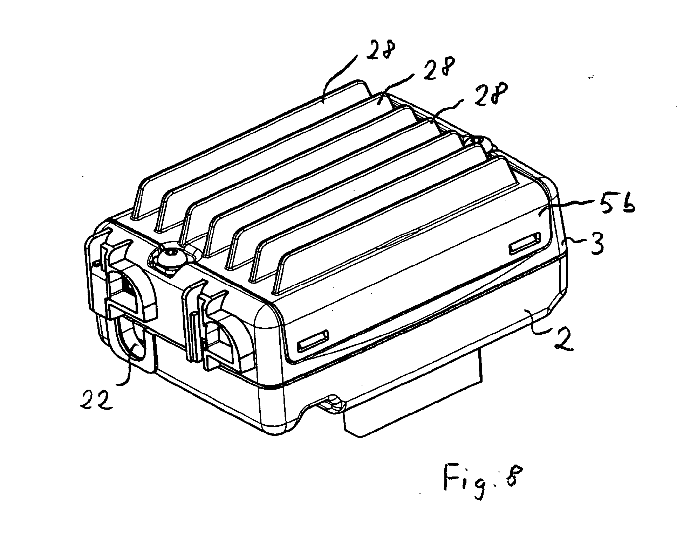

Die Figuren 7 und 8 zeigen alternative Deckelausführungen, welche einer noch intensiveren Kühlung ermöglichen, die Konstruktionen im Inneren sind identisch mit den vorbeschriebenen. Der Deckel 5a gemäß Fig. 7 weist im Bereich des flächigen Teils 7 an seiner Außenseite eine Vielzahl von zapfenartigen Vorsprüngen 27 auf, welche die Konvektionsfläche in diesem Bereich um ein Vielfaches vergrößern.

Bei dem anhand von Fig. 8 dargestellten Deckel 5b sind an der Oberseite Kühlrippen 28 angeformt. Auch der Deckel 5b weist eine Ausformung 6 mit Ringwulst 8 und darin gebildeten flächigen Teil 7 auf, der jedoch aufgrund der Darstellungen in Fig. 8 nicht sichtbar ist. Es wird also in gleicher Weise für eine intensive Wärmeleitverbindung zwischen dem Wärme erzeugenden Bauteil 13 und 15 und dem Deckel 5a bzw. 5b gesorgt.

### Bezugszeichenliste

- 1: - Klemmenkasten
- 2: - Gehäuseunterteil
- 3: - Gehäuseoberteil
- 4: - Dichtung
- 5: - Deckel
- 5a: - Deckel gemäß Fig. 7
- 5b: . Deckel gemäß Fig. 8
- 6: - Ausformung im Deckel
- 7: - flächiger Teil im Deckel
- 8: - Ringwulst im Deckel
- 9: - Einformung
- 10: - Ringwulst
- 11: - Dichtung zum Deckel
- 12: - Durchbrechung
- 13: - integrierter Schaltkreis, Wärme erzeugendes Bauteil
- 14: - Platine
- 15: Wärme erzeugendes Bauteil
- 16: - Wärmeleitkissen
- 17: - Ausnehmungen
- 18: - Rastkörper
- 19: - Halteelement
- 20: - zentrale Hülse
- 21: - Hülsen
- 22: - Kabeldurchführung
- 23: - Klemmen
- 24: - Kontaktstifte
- 25: - Ausnehmung im Deckel
- 26: - Ausnehmung im Gehäuseoberteil
- 27: - zapfenartige Vorsprünge
- 28: - Kühlrippen

## Patentansprüche

1. Klemmenkasten für einen Elektromotor mit einem mindestens aus einem Gehäuseoberteil (3) und einem Gehäuseunterteil (2) bestehenden Gehäuse sowie mindestens einem, darin angeordneten Wärme erzeugenden Bauteil (13, 15) und mit einem am Gehäuseoberteil (3) vorgesehenen Deckel, der zumindest abschnittsweise aus einem Wärme leitenden Material besteht und der mit dem Wärme erzeugenden Bauteil (13, 15) wärmeleitend verbunden ist, **dadurch gekennzeichnet, dass** das Gehäuseoberteil (3) und das Gehäuseunterteil (2) ein Kunststoffigehäuse bilden und dass der Deckel (5) durch ein Blechformteil gebildet ist.

2. Klemmenkasten nach Anspruch 1, **dadurch gekennzeichnet, dass** der Deckel (5) oder Deckelabschnitt aus Aluminium oder einer Aluminiumlegierung besteht.

3. Klemmenkasten nach einem der vorhergehenden Ansprüche **dadurch gekennzeichnet, dass** der wärmeleitende Deckel (5a, 5b)dder Deckelabschnitt mit einem Kühlkörper (27) versehen ist oder zumindest Teil eines Kühlkörpers (28) bildet.

4. Klemmenkasten nach einem der vorhergehenden Ansprüche, **dadurch gekennzeichnet, dass** der Klemmenkasten (1) an seiner Oberseite eine vorzugsweise kreisrunde Einformung (9) aufweist, wobei innerhalb dieses eingeformten Bereichs eine Durchbrechung (12) vorgesehen ist, durch welche die wärmeleitende Verbindung mit dem Deckel (5) erfolgt.

5. Klemmenkasten nach Anspruch 4, **dadurch gekennzeichnet, dass** der Deckel (5) eine Ausformung (6) aufweist, die in die Einformung (9) eingreift, wobei zwischen Einformung (9) und Ausformung (6) eine umlaufende, vorzugsweise radial wirkende Dichtung (11) eingegliedert ist.

6. Klemmenkasten nach einem der vorhergehenden Ansprüche **dadurch gekennzeichnet, dass** das Gehäuseoberteil (3) zum Motor hin offen ausgebildet und dort mit dem Gehäuseunterteil (2) abgeschlossen ist, das über eine umlaufende Dichtung (4) zum Gehäuseoberteil (3) hin abgedichtet ist.

7. Klemmenkasten nach einem der vorhergehenden Ansprüche, **dadurch gekennzeichnet, dass** eine oder mehrere Dichtungen (4, 11) im Mehrkomponenetenspritzgussverfahrenverfahren zusammen mit dem Gehäuseoberteil (3) hergestellt ist/sind.

8. Klemmenkasten nach einem der Ansprüche 5 bis 7 **dadurch gekennzeichnet, dass** der Deckel (5) U-förmig ausgebildet ist, mit den Schenkeln das Gehäuseoberteil (3) seitlich umgreift und dort vorzugsweise formschlüssig rostend derart festgelegt ist, dass seine Ausformung (6) in Richtung auf die gehäuseseitige Einformung (9) kraftbeourschiagt ist.

9. Klemmenkasten nach einem der vorhergehenden Ansprüche, **dadurch gekennzeichnet, dass** der Deckel (5) im Bereich der Durchbrechung (12) flächig an dem Wärme erzeugenden Bauteil (13, 15) oder einem damit wärmeleitend verbundenen Bauteil (16) anliegt.

10. Klemmenkasten nach einem der vorhergehenden Ansprüche, **dadurch gekennzeichnet, dass** innerhalb des Gehäuses eine Platine (14) angeordnet ist, welche Steckkontakte (24) trägt, die zur elektrischen Verbindung mit dem Wicklungskopf des Motors bestimmt und dicht durch das Gehäuseunterteil (2) herausgeführt sind, weiche mindestens ein Wärme erzeugendes Bauteil (13, 15) trägt und die innerhalb des Gehäuses etwa parallel und mit Abstand zum Deckel (5) angeordnet ist.

11. Klemmenkasten nach einem der vorhergehenden Ansprüche, **dadurch gekennzeichnet, dass** zwischen dem Wärme erzeugenden Bauteil (13, 15) und dem wärmeleitenden Deckel (5) bzw. Deckelabschnitt ein Wärmeleitkissen (16) angeordnet ist.

12. Klemmenkasten nach einem der vorhergehenden Ansprüche, **dadurch gekennzeichnet, dass** ein Frequenzumrichter vorgesehen ist, dessen Leistungsschalter das Wärme erzeugende Bauteil (13) bzw. Wärme erzeugenden Bauteile (13, 15) bilden.

13. Klemmenkasten nach einem der vorhergehenden Ansprüche, **dadurch gekennzeichnet, dass** ein als Kunststoffspritzgussteil ausgebildetes Halteelement (19) vorgesehen ist, mit welchem die Platine (14) innerhalb des Gehäuses positioniert und mit dem Deckel (5) in wärmeleitende Verbindung gebracht ist.

## Claims

1. A terminal box for an electric motor with a housing consisting at least of a housing upper part (3) and a housing lower part (2), as well as with at least one component (13, 15) which is arranged in said housing and which produces heat, and with a cover which is provided on the housing upper part (3) and which at least in sections consists of a material conducting heat and which is connected to the heat-producing component (13, 15) in a heat-conducting manner, **characterised in that** the housing upper part (3) and the housing lower part (2) form a plastic housing and that the cover (5) is formed by a sheet-metal shape part.

2. A terminal box according to claim 1, **characterised in that** the cover (5) or the cover section consists of aluminium or of an aluminium alloy.

3. A terminal box according to one of the preceding claims, **characterised in that** the heat-conducting cover (5a, 5b) or the cover section is provided with a cooling body (27) or at least forms part of a cooling body (28).

4. A terminal box according to one of the preceding claims, **characterised in that** the terminal box (1) at its upper side comprises a preferably circularly round recess (9), wherein an opening (12) is provided within this recessed region, through which opening the heat-conducting connection to the cover (5) is effected.

5. A terminal box according to claim 4, **characterised in that** the cover (5) comprises a protrusion (6) which engages into the recess (9), wherein a peripheral, preferably radially acting seal (11) is integrated between the recess (9) and the protrusion (9).

6. A terminal box according to one of the preceding claims, **characterised in that** the housing upper part (3) is open to the motor and is sealed there with the housing lower part (2), which is sealed to the housing upper part (3) via a peripheral seal (4).

7. A terminal box according to one of the preceding claims, **characterised in that** one or more seals (14, 11) is/are manufactured together with the housing upper part (3) with the multicomponent injection moulding method.

8. A terminal box according to one of the claims 5 to 7, **characterised in that** the cover (5) is formed in a U-shaped manner and with the limbs engages laterally around the housing upper part (3) and there is fixed in a preferably positive-fit locking manner, and in a manner such that its protrusion (6) is impinged by force in the direction of the recess (9) on the housing side.

9. A terminal box according to one of the preceding claims, **characterised in that** the cover (5) in the region of the opening (12) bears in a surfaced manner on the heat-producing component (13, 15) or on a component (16) connected thereto in a heat conducting manner.

10. A terminal box according to one of the preceding claims, **characterised in that** a circuit board (14) is arranged within the housing and carries plug contacts (24), which are envisaged for the electrical contact to the winding head of the motor and are led out through the housing lower part (2) in a sealed manner, said circuit board carrying at least one heat-producing component (13, 15) and being arranged within the housing roughly parallel and at a distance to the cover (5).

11. A terminal box according to one of the preceding claims, **characterised in that** a thermally conducting cushion (16) is arranged between the heat-producing component (13, 15) and the heat-conducting cover (5) or cover section.

12. A terminal box according to one of the preceding claims, **characterised in that** a frequency converter is provided, whose power switches form the heat-producing component (13) or the heat-producing components (13, 15).

13. A terminal box according to one of the preceding claims, **characterised in that** a holding element (19) designed as an injection moulding part is provided, with which the circuit board (14) is positioned within the housing and is brought into heat-conducting connection with the cover (5).

## Revendications

1. Boîte à bornes pour un moteur électrique, comprenant un boîtier, constitué au moins d'une partie supérieure (3) de boîtier et d'une partie inférieure (2) de boîtier, ainsi qu'au moins un composant générateur de chaleur (13, 15) disposé à l'intérieur et un couvercle prévu sur la partie supérieure (3) du boîtier, lequel couvercle est constitué, au moins pour partie, d'un matériau thermoconducteur et est relié de manière thermoconductrice au composant générateur de chaleur (13, 15),
**caractérisée en ce que** la partie supérieure (3) et la partie inférieure (2) forment un boîtier en matière plastique et **en ce que** le couvercle (5) est réalisé en tôle préformée.

2. Boîte à bornes selon la revendication 1, **caractérisée en ce que** le couvercle (5) ou partie de couvercle est réalisé(e) en aluminium ou dans un alliage d'aluminium.

3. Boîte à bornes selon l'une des revendications précédentes, **caractérisée en ce que** le couvercle (5a, 5b) ou partie de couvercle thermoconducteur est muni d'un dissipateur de chaleur (27) ou constitue au moins une partie d'un dissipateur de chaleur (28).

4. Boîte à bornes selon l'une des revendications précédentes, **caractérisée en ce que** la boîte à bornes (1) présente, sur sa face supérieure, un élément en creux (9) de préférence circulaire, une ouverture (12) étant prévue à l'intérieur de cette région formée en creux, au travers de laquelle s'opère la liaison thermoconductrice avec le couvercle (5).

5. Boîte à bornes selon la revendication 4, **caractérisée en ce que** le couvercle (5) présente un élément en saillie (6) qui s'engage dans l'élément en creux (9), un joint d'étanchéité (11) périphérique, de préférence agissant radialement, étant inséré entre l'élément en creux (9) et l'élément en saillie (6).

6. Boîte à bornes selon l'une des revendications précédentes, **caractérisée en ce que** la partie supérieure (3) du boîtier est ouverte vers le moteur et qu'elle est fermée en cet endroit par la partie inférieure (2) du boîtier qui est rendue étanche en direction de la partie supérieure (3) du boîtier au moyen d'un joint d'étanchéité périphérique (4).

7. Boîte à bornes selon l'une des revendications précédentes, **caractérisée en ce qu'**un ou plusieurs joints d'étanchéité (4, 11) est/sont réalisé(s) selon le procédé de moulage par injection multi-composants conjointement avec la partie supérieure (3) du boîtier.

8. Boîte à bornes selon l'une des revendications 5 à 7, **caractérisée en ce que** le couvercle (5) est en forme de U et enveloppe latéralement avec les branches la partie supérieure (3) du boîtier et y est fixé de manière encliquetable, de préférence par complémentarité de forme, de façon telle que son élément en saillie (6) est soumis à une force en direction de l'élément en creux (9) côté boîtier.

9. Boîte à bornes selon l'une des revendications précédentes, **caractérisée en ce que** le couvercle (5), dans la région de l'ouverture (12), repose à plat sur le composant générateur de chaleur (13, 15) ou sur un composant (16) qui est en liaison thermoconductrice avec celui-ci.

10. Boîte à bornes selon l'une des revendications précédentes, **caractérisée en ce qu'**à l'intérieur du boîtier est disposée une platine (14) qui porte des contacts enfichables (24) destinés au raccordement électrique avec la tête d'enroulement du moteur et qui sortent de manière étanche à travers la partie inférieure (2) du boîtier, laquelle platine porte au moins un composant générateur de chaleur (13, 15) et est disposée à l'intérieur du boîtier de façon sensiblement parallèle au couvercle (5) et à distance de celui-ci.

11. Boîte à bornes selon l'une des revendications précédentes, **caractérisée en ce qu'**est disposé un coussin thermoconducteur (16) entre le composant générateur de chaleur (13, 15) et le couvercle (5) ou partie de couvercle thermoconducteur.

12. Boîte à bornes selon l'une des revendications précédentes, **caractérisée en ce qu'**est prévu un convertisseur de fréquence dont les interrupteurs de puissance constituent le composant générateur de chaleur (13) ou les composants générateurs de chaleur (13, 15).

13. Boîte à bornes selon l'une des revendications précédentes, **caractérisée en ce qu'**est prévu un élément de maintien (19) réalisé sous forme de pièce moulée par injection en matière plastique au moyen de laquelle la platine (14) est positionnée à l'intérieur du boîtier et est amenée en liaison thermoconductrice avec le couvercle (5).
